# EUROPÄISCHE PATENTSCHRIFT

(11) **EP 2 938 446 B1**
(45) Veröffentlichungstag und Bekanntmachung des Hinweises auf die Patenterteilung: **07.09.2016**
(21) Anmeldenummer: 13811899.7
(22) Anmeldetag: 18.12.2013
(51) Int. Cl.: B21B 31/07

(54) **EINBAUSTÜCK ZUM LAGERN EINER WALZE IN EINEM WALZENSTÄNDER**
INSTALLATION PIECE FOR SUPPORTING A ROLLER IN A ROLLER STAND
EMPOISE POUR MONTER UN CYLINDRE DANS UN MONTANT DE LAMINOIR

(30) Priorität: 28.12.2012 DE 102012224511
(43) Veröffentlichungstag der Anmeldung: 04.11.2015
(73) Patentinhaber: SMS group GmbH, 40237 Düsseldorf (DE)
(72) Erfinder: GRIMMEL, Rüdiger, 57250 Netphen (DE); KELLER, Karl, 57271 Hilchenbach (DE); ROEINGH, Konrad, 57271 Hilchenbach (DE); ALKEN, Johannes, 57076 Siegen (DE); SCHEFFE, Kurt, 57271 Hilchenbach (DE)
(74) Vertreter: Klüppel, Walter
(86) Internationale Anmeldenummer: PCT/EP2013/077091
(87) Internationale Veröffentlichungsnummer: WO 2014/102109

(56) Entgegenhaltungen:
- WO-A2-03/090948
- CH-A- 95 561

## Beschreibung

Die Erfindung betrifft ein Einbaustück, d. h. ein Lagergehäuse zum Lagern einer Walze in einem Walzenständer eines Walzgerüstes. Das Walzgerüst weist eine Hauptbohrung auf zur Aufnahme eines Zapfens der Walze. Das Einbaustück weist einen Zulauf auf zum Zuführen von Schmiermittel typischerweise unter Druck in das Innere des Einbaustücks und einen Ablauf zum Zurückführen des Schmiermittels aus dem Einbaustück. Das Schmiermittel dient zum Schmieren des Walzenzapfenlagers während des Walzens von Walzgut, z. B. Brammen.

Dem Einbaustück kann eine Pumpeneinrichtung zugeordnet sein zum Fördern des durch den Rücklauf aus dem Einbaustück zurückfließenden Schmiermittels. Die Pumpeneinrichtung weist dann ein Gehäuse, einen Zulaufkanal und einen Ablaufkanal auf, wobei der Zulaufkanal in der Pumpeneinrichtung mit dem Zulauf im Einbaustück und der Ablaufkanal in der Pumpeneinrichtung mit dem Ablauf für das Schmiermittel im Einbaustück strömungstechnisch kommuniziert. Die Pumpeneinrichtung kann von dem Strom des Schmiermittels im Zulauf angetrieben werden. Derartige Einbaustücke mit Pumpeinrichtungen zur Unterstützung des Rücklaufs des Schmiermittels sind im Stand der Technik grundsätzlich bekannt, z. B. aus den europäischen Patentschriften EP 1 078 172 B1 oder EP 1 497 048 B1 oder der internationalen Patentanmeldung WO 03/090948 A2. Der Oberbegriff von Anspruch 1 basiert auf der WO 03/090948 A2.

Weiterhin sind im Stand der Technik verschiedenste Arten von Pumpeinrichtungen, z. B. Umwälzpumpen, Wasserkraftschnecken oder Schneckenpumpen, z. B. aus Wikipedia, allgemein bekannt. Auch Schneckenrohrförderer sind, z. B. bekannt aus den Patentschriften US 1,434,138 oder CH 95561.

Der Erfindung liegt die Aufgabe zugrunde, ein Einbaustück mit einer alternativen Pumpeinrichtung zum Unterstützen des Rücklaufs von Schmiermittel aus dem Einbaustück bereitzustellen.

Diese Aufgabe wird durch den Gegenstand des Patentanspruchs 1 gelöst. Dieser ist dadurch gekennzeichnet, dass die Pumpeinrichtung in ihrem Gehäuse eine Schneckenpumpe mit einer Förderschnecke in dem Ablaufkanal zum Fördern des zurücklaufenden Schmiermittels und eine von dem unter Druck stehenden zulaufenden Schmiermittel angetriebene Turbine in dem Zulaufkanal aufweist zum Antreiben der Schneckenpumpe.

Der Zulauf und der Ablauf, nachfolgend auch Rücklauf genannt, sind im Einbaustück angeordnet. Der Zulaufkanal und der Ablaufkanal, nachfolgend auch Rücklaufkanal genannt, sind außerhalb des Einbaustücks in der Pumpeneinrichtung angeordnet. Der Zulauf fluchtet zumindest weitgehend mit dem Zulaufkanal an ihrer Verbindungsstelle. Der Ablaufkanal fluchtet zumindest weitgehend mit dem Ablaufkanal an ihrer Verbindungsstelle.

Gemäß einem ersten Ausführungsbeispiel ist die Schneckenpumpe aus einem rohrförmigen Grundkörper gebildet, welcher auf der Außenseite eine Förderschnecke trägt, und weist das Gehäuse der Pumpeneinrichtung eine Bohrung auf, in welcher die Schneckenpumpe in Lagern drehbar gelagert ist. Der Raum zwischen der Außenseite des Grundkörpers und der Innenseite der Bohrung bildet den Ablaufkanal, wobei die Förderschnecke in den Rücklaufkanal hineinragt zum Fördern des zurücklaufenden Schmiermittels und wobei die Lager - und damit auch die Förderschnecke - mit Hilfe von Haltemitteln im Inneren der Bohrung ortsfest positioniert aber drehbar gelagert sind.

Vorteilhafterweise sind dabei die einzelnen Wendel der Förderschnecke jeweils mit einem spitzen Winkel α - in Strömungsrichtung des Schmiermittels im Rücklauf - gegenüber dem rohrförmigen Grundkörper geneigt. Diese Neigung erhöht vorteilhafterweise den Wirkungsgrad der Förderschnecke.

Die Haltemittel für die Lager sind beispielhaft in Form von Speichenrädern oder Lochplatten ausgebildet, welche sich jeweils in einer Ebene senkrecht zur Längsachse der Bohrung in dem Gehäuse erstrecken. An ihrer Peripherie sind sie jeweils an der Innenseite der Bohrung mit dem Gehäuse verbunden. An ihrer Innenseite tragen sie - vorzugsweise koaxial zur Bohrung - jeweils eines der Lager für die Schneckenpumpe.

Die Ausbildung der Haltemittel in Form von Speichenrädern oder Lochplatten ist zumindest unterhalb der Längsachse der Bohrung zwingend erforderlich, um die Durchlässigkeit des Rücklaufkanals für das Schmiermittel zu gewährleisten.

Das Innere des rohrförmigen Grundkörpers bildet den Zulaufkanal. In diesem Zulaufkanal ist die Turbine zum Antreiben der Schneckenpumpe angeordnet. Diese erfindungsgemäße konstruktive Ausgestaltung, bei welcher der Zulaufkanal zentral entlang der Längsachse und der Rücklaufkanal koaxial zu dem Zulaufkanal angeordnet sind, hat den Vorteil, dass die Pumpeneinrichtung sehr kompakt, d. h. platzsparend gebaut werden kann.

Vorteilhafterweise liegt das Verhältnis von Querschnittsfläche des Rücklaufkanals zur Querschnittsfläche des Zulaufkanals zwischen 2 und 10. Dass der Rücklaufkanal einen größeren Querschnitt als der Zulaufkanal haben muss, ergibt sich allein aus der Tatsache, dass das Schmiermittel unter Druck in den Zulaufkanal gepumpt wird, während es - bei gleichem Volumenstrom - im Rücklaufkanal lediglich mit Atmosphärendruck fließt.

Der Rücklauf tritt auf der Ablaufseite des Einbaustücks in Form einer einzigen Bohrung aus dem Einbaustück aus und der einzige Zulauf ist innerhalb der Bohrung für den Rücklauf in das Einbaustück hineingeführt. Die Pumpeneinrichtung ist vorzugsweise als separates Aggregat außen auf die Ablaufseite des Einbaustücks so aufgesetzt, dass der Zulaufkanal der Pumpeneinrichtung mit dem Zulauf des Einbaustücks und der Rücklaufkanal der Pumpeneinrichtung mit dem Rücklauf des Einbaustücks strömungstechnisch kommuniziert.

Die Ablaufseite des Einbaustücks ist diejenige Seite, welche der Ballenseite des Einbaustücks gegenüberliegt. Die Ballenseite des Einbaustücks ist diejenige Seite, welche bei eingebauter Walze, dem Ballen der Walze direkt gegenüberliegt.

Gemäß einem weiteren Ausführungsbeispiel ist die Bohrung für den Rücklauf auf der Ablaufseite des Einbaustücks in Bezug auf die Hauptbohrung zur Aufnahme des Walzenzapfens derart positioniert, dass der obere Scheitelpunkt der Bohrung für den Rücklauf einen vertikalen Abstand s zum unteren Scheitelpunkt der Wirkungsöffnung der in der Hauptbohrung angeordneten ringförmigen Dichtlippe aufweist mit 0 < s < r1, wobei r1 dem Radius der Bohrung für den Rücklauf entspricht. Der obere Scheitelpunkt der Bohrung für den Rücklauf liegt dabei vorzugsweise oberhalb des unteren Scheitelpunkts des Wirkungsradius der Dichtlippe. Zwischen der Mitte der Hauptbohrung und der Mitte der Bohrung für den Rücklauf besteht ein horizontaler Abstand d1 mit R1 < d1 < R1 + 100 mm, wobei R1 den Wirkungsradius der ringförmigen Dichtlippe bezeichnet; er ist etwas kleiner als der Radius der Hauptbohrung.

Die ringförmige Dichtlippe ist auf den Zapfen der Walze aufgesetzt und dichtet diesen gegenüber der Hauptbohrung des Einbaustücks ab. Die Wirkungsöffnung der Dichtlippe meint jene Öffnung, welche sich ergibt, wenn die Dichtlippe bei eingesetztem Walzenzapfen radial leicht gestaucht ist. Der Radius dieser Wirkungsöffnung wird als Wirkungsradius der Dichtlippe bezeichnet.

Der Durchmesser der Bohrung für den Rücklauf im Einbaustück und den Rücklaufkanal in der Pumpeneinrichtung beträgt vorteilhafterweise lediglich zwischen 40 und 80 mm.

Bei dem Einbaustück kann es sich um ein oberes Einbaustück zum Lagern einer oberen Stützwalze oder um ein unteres Einbaustück zum Lagern einer unteren Stützwalze in dem Walzgerüst handeln.

Schließlich ist es von Vorteil, dass die Unterseite des oberen Einbaustücks eben ausgebildet sein kann. Für den Abstand d2 zwischen dem unteren Scheitelpunkt UB der Hauptbohrung (110) des Einbaustücks und der ebenen Unterseite des oberen Einbaustücks gilt d2 < 20 mm, vorzugsweise d2 < 10 mm.

Generell bietet die vorliegende Erfindung folgende Vorteile:
Die Pumpeneinrichtung erhöht den Volumenstrom des Schmiermittels im Ablauf. Dies hat den Vorteil, dass bei den erfindungsgemäßen Einbaustücken eine kleinere Querschnittfläche bzw. ein kleinerer Radius für die Bohrung des Ablaufs gewählt werden kann im Vergleich zu Einbaustücken ohne die erfindungsgemäße Pumpeneinrichtung. Insbesondere kann bei Verwendung der erfindungsgemäßen Pumpenvorrichtung auf das Vorsehen einer zweiten Bohrung für den Rücklauf des Schmiermittels, wie sie typischerweise bei traditionellen Einbaustücken verwendet wird, gänzlich verzichtet werden; d. h., bei Verwendung der erfindungsgemäßen Pumpeneinrichtung braucht lediglich eine (Zahlwort) Bohrung für den Ablauf auf der Ablaufseite des Einbaustücks vorgesehen zu werden.

Weiterhin kann insbesondere bei Einhaltung des beanspruchten horizontalen Abstandes d1 und des vertikalen Abstandes s ein vorgegebener maximaler Abstand zwischen dem unteren Scheitelpunkt (UB) der Hauptbohrung (110) und der vorzugsweise eben ausgebildeten Unterseite des Einbaustücks eingehalten bzw. sogar unterschritten werden. Dies wiederum hat den Vorteil, dass die Bauhöhe des Einbaustücks insgesamt im Vergleich zu traditionellen Einbaustücken vergleichsweise niedrig gehalten werden kann, woraus der Vorteil resultiert, dass im Fenster des Walzenständers mehr Platz für den Einbau anderer Komponenten, z. B. für den Einbau von Biegezylindern vorhanden ist.

Der Erfindung sind insgesamt fünf Figuren beigefügt, wobei
- Figur 1: eine perspektivische Ansicht des erfindungsgemäßen Einbaustücks;
- Figur 2: einen Längsschnitt durch das Einbaustück mit angesetzter Pumpeneinrichtung;
- Figur 3: einen Längsschnitt durch die erfindungsgemäße Pumpeneinrichtung
- Figur 4: einen schematisierten Querschnitt durch die Ablaufseite des Einbaustücks;
und
- Figur 5: einen Querschnitt durch die erfindungsgemäße Pumpeneinrichtung;
zeigt.

Die Erfindung wird nachfolgend anhand der angefügten Figuren in Form von Ausführungsbeispielen detailliert beschrieben. In allen Figuren sind gleiche technische Elemente mit gleichen Bezugszeichen bezeichnet.

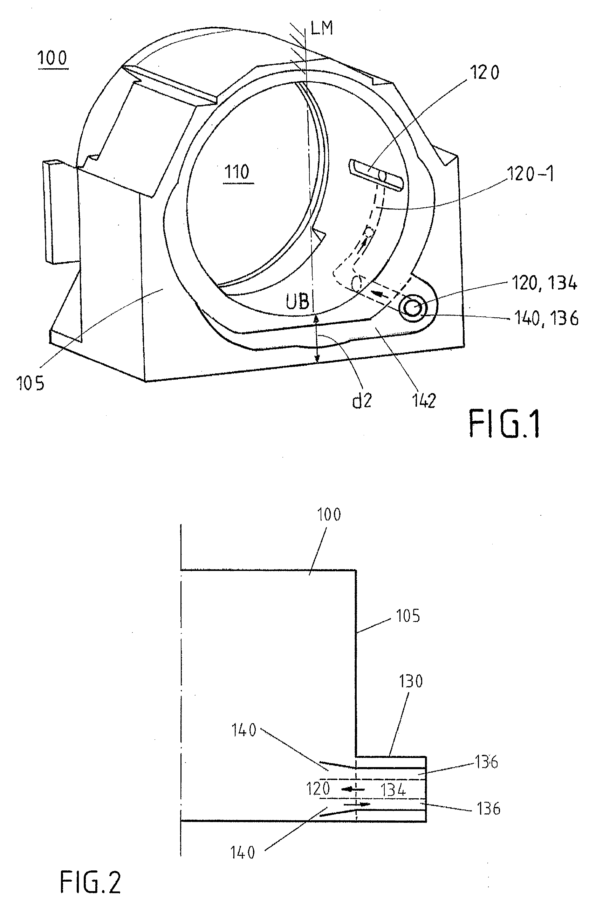

Figur 1 zeigt beispielhaft eine perspektivische Ansicht des erfindungsgemäßen Einbaustücks 100, insbesondere mit Blick auf dessen Ablaufseite 105.

Ein Einbaustück bezeichnet ein Lagergehäuse zur Aufnahme eines Walzenzapfens (hier nicht dargestellt). Das Einbaustück ist typischerweise vertikal verschiebbar im Fenster eines Walzenständers gelagert. In dem Einbaustück ist eine Hauptbohrung 110 vorgesehen zur Aufnahme des Walzenzapfens, vorzugsweise auch noch eine Lagerbuchse und eine Zapfenbuchse, auf die jedoch hier nicht näher eingegangen wird. Wenn die Walze bzw. der Walzenzapfen in der Bohrung des Einbaustücks gelagert ist, so ist eine Seite des Einbaustücks dem Ballen der Walze zugeordnet. Diese Seite des Einbaustücks wird als Ballenseite bezeichnet. Die bereits erwähnte Ablaufseite 105 des Einbaustücks liegt der Ballenseite gegenüber. Der Name rührt daher, weil auf dieser Seite das Schmiermittel, welches während des Betriebs, d. h. während der Drehungen der Walze, dem Einbaustück zugeführt wird auf der Ballenseite austritt und von dort abgeführt wird.

In der Figur 1 ist zum einen ein Zulauf 120 zu erkennen, durch welchen das Schmiermittel 200 in das Einbaustück 100 hineingeführt wird, um über die Zulauföffnung 120-1 in den Zwischenraum zwischen der Bohrung des Einbaustücks und den Walzenzapfen, bzw. genauer gesagt in den Zwischenraum zwischen einer Lagerbuchse und einer Zapfenbuchse, einzutreten, um dort einen Schmierfilm auszubilden. Während des Walzenbetriebs wird das Schmiermittel regelmäßig in einem Kreislauf geführt, d. h. es wird regelmäßig Schmiermittel unter Druck über den Zulauf 120 zugeführt und über die Ablaufseite abgeführt. Nach seiner Verwendung in dem Zwischenraum sammelt sich das Schmiermittel im unteren Bereich des Einbaustücks auf der Ballenseite sowie der Ablaufseite in einem Schmiermittelauffangraum 142 des Einbaustücks. Von dort wird es typischerweise abgepumpt und dem Schmiermittelkreislauf wieder zugeführt. Die Pumpe, welche zur Aufrechterhaltung des Schmiermittelkreislaufes dient und welche das Schmiermittel mit einem Druck p in den Zulauf 120 pumpt, ist nicht Gegenstand der Erfindung und deshalb auch in den Figuren nicht weiter dargestellt. Wichtig ist jedoch, dass diese Pumpe nicht zu verwechseln ist mit der Pumpeinrichtung 130, welche Gegenstand der Erfindung ist.

In Figur 1 repräsentiert der äußere koaxiale Ring den Ablauf 140 innerhalb des Einbaustücks und den typischerweise damit fluchtenden Ablaufkanal 136 in der erfindungsgemäßen Pumpeinrichtung zum Abführen des Schmiermittels, welches sich in dem Schmiermittelsammelraum 142 angesammelt hat.

Weiterhin ist in der Figur 1 die senkrechte Mittenebene LM der Hauptbohrung 110 angedeutet. Wie oben am Ende des allgemeinen Teils der Beschreibung bereits erläutert, ermöglicht die nachfolgend beschriebene erfindungsgemäße Pumpeneinrichtung, dass der Abstand d2 zwischen dem unteren Scheitelpunkt UB der Hauptbohrung 110 und der vorzugsweise eben ausgebildeten Unterseite des oberen Einbaustücks vergleichsweise klein gehalten werden kann: Die Obergrenze liegt bei d2<20mm, vorzugsweise d2<10mm. Die Untergrenze wird demgegenüber durch Sicherheitsgründe bzw. durch die notwendige Traglast definiert.

Figur 2 zeigt einen Längsschnitt durch das Einbaustück 100 mit seiner Ablaufseite 105 und der Pumpeneinrichtung 130. Es ist zu erkennen, dass die Pumpeneinrichtung 130 auf die Ablaufseite 105 des Einbaustücks aufgesetzt ist und dass der Zulauf 120 für das Schmiermittel 200 im Inneren des Einbaustücks 100 mit dem Zulaufkanal 134 im Inneren der Pumpeneinrichtung 130 strömungstechnisch kommuniziert. Gleichermaßen fluchten der Ablauf 140 im Inneren des Einbaustücks mit dem Ablaufkanal 136 innerhalb der Pumpeneinrichtung. Erfindungsgemäß sind der Zulaufkanal 134 und der Ablaufkanal 136 koaxial zueinander angeordnet.

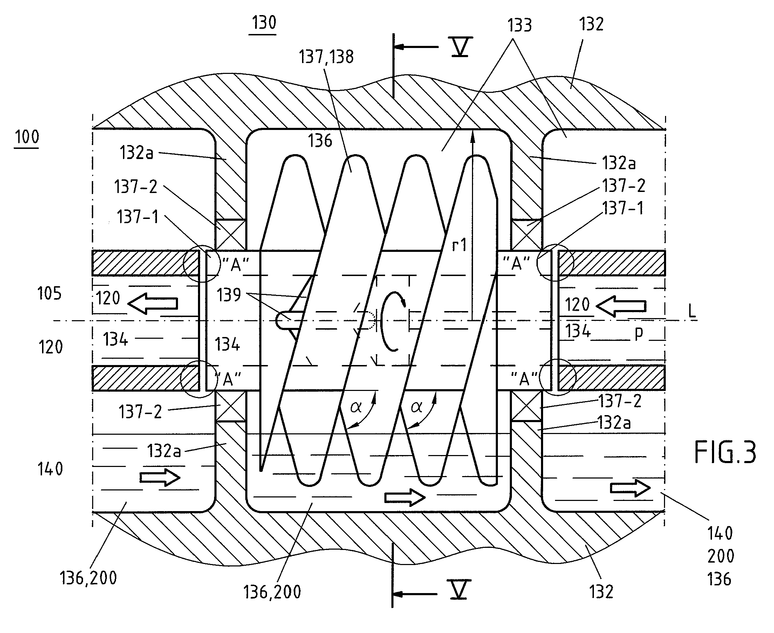

Figur 3 zeigt einen Längsschnitt durch die erfindungsgemäße Pumpeneinrichtung 130. Die Pumpeneinrichtung besitzt ein Gehäuse 132, in welchem eine Schneckenpumpe 137 drehbar gelagert ist. Ein rohrförmiger Grundkörper 137-1 der Schneckenpumpe 137 ist in Lagern 137-2 drehbar gelagert. Die Lager 137-2 und damit auch die darin gelagerte Schneckenpumpe 137 werden im Inneren des Gehäuses 132 mit Hilfe von Haltemitteln 132a gehalten. Die Haltemittel 132a sind beispielsweise in Form von Speichenrädern oder Lochplatten ausgebildet. Die Haltemittel erstrecken sich vorzugsweise jeweils in einer Ebene senkrecht zur Längsachse L der Bohrung in dem Gehäuse 132. Die Haltemittel sind an ihrer Peripherie an der Innenseite der Bohrung mit dem Gehäuse 132 z. B. einstückig verbunden.

Der rohrförmige Grundkörper 137-1 der Schneckenpumpe 137 trägt auf seiner Außenseite eine Förderschnecke 138. Die Förderschnecke 138 ragt mit ihren Wendeln in den Zwischenraum zwischen der Außenseite des rohrförmigen Grundkörper 137-1 der Schneckenpumpe 137 und der Innenseite der Bohrung in dem Gehäuse 132, wobei dieser Zwischenraum den Ablaufkanal 136 für das Schmiermittel 200 bildet. Die Wendel der Förderschnecke ist mit einem Winkel α gegenüber der Außenseite des rohrförmigen Grundkörpers 137-1 in Strömungsrichtung angestellt. Die Strömungsrichtung des durch den Zulaufkanal 134 zugeführten und des aus dem Schmiermittelsammelraum 142 ablaufenden Schmiermittels 200 ist in Figur 3 durch Pfeile dargestellt.

Der Ablaufkanal 136 verläuft koaxial zu einem Zulaufkanal 134, welcher durch das Innere des rohrförmigen Grundkörpers 137 gebildet wird. Im Inneren des rohrförmigen Grundkörpers befindet sich eine Turbine 139, welche an ihrer Außenseite mit dem rohrförmigen Grundkörper 137-1 drehfest verbunden ist. Die Turbine 139 wird durch das unter Druck stehende und über den Zulaufkanal 134 von der Kreislaufpumpe (hier nicht gezeigt) zugeführte Schmiermittel angetrieben, welches in Figur 3 von rechts nach links den Zulaufkanal 134 durchströmt. Vorteilhafterweise benötigt die Turbine deshalb keine eigene Antriebseinrichtung und keine externe bzw. zusätzliche Energiezuführung. Die Turbine treibt aufgrund ihrer festen Verbindung mit dem rohrförmigen Grundkörper 137-1 die Schneckenpumpe 137 an und versetzt auf diese Weise die Förderschnecke 138 in Drehung. Weil diese Förderschnecke 138, wie bereits oben erwähnt, in das in dem Ablaufkanal 136 befindliche Schmiermittel 200 eintaucht, fördert die Förderschnecke 138 mit ihrer Drehung wunschgemäß den Ablauf des Schmiermittels 200 aus dem Schmiermittelsammelraum 142. Nachdem das zulaufende Schmiermittel die Turbine im Inneren des Zulaufkanals 134 passiert hat, tritt es im Inneren des Einbaustücks in den dortigen Schmiermittelzulauf 120 ein, um über die Zulauföffnung 120-1 in den Zwischenraum zwischen Walzenzapfen und Bohrung des Einbaustücks bzw. zwischen Zapfenbuchse und Lagerbuchse eingespeist zu werden.

An Stelle "A" ist eine nach Stand der Technik Dichtungseinrichtung angeordnet.

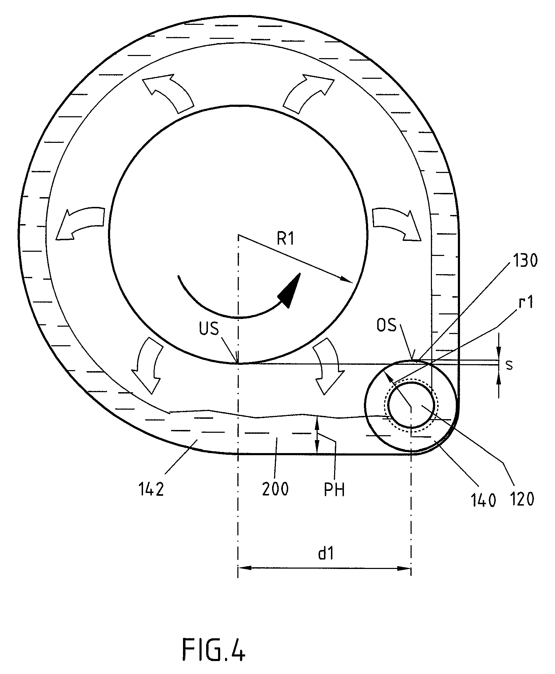

Figur 4 zeigt einen Querschnitt durch die Ablaufseite des Einbaustücks 100. Der Querschnitt ist lediglich stark schematisiert dargestellt. Er dient zur Veranschaulichung der für die vorliegende Erfindung wesentlichen konstruktiven Zusammenhänge.

Zunächst ist es wichtig, den Mittelpunkt bzw. die Längsachse der erfindungsgemäßen Pumpeinrichtung 130 in Bezug auf den Schmiermittelsammelraum 142 so zu positionieren, dass bei Walzbetrieb der maximale Pegelstand PH des Schmiermittels 200 im Inneren des Schmiermittelsammelraums 142 nicht höher steigt als die Mittenachse bzw. die Längsachse L der Pumpeneinrichtung 130. Andererseits soll der Pegelstand des Schmiermittels 200, z. B. Öl im Rücklaufkanal, während des Betriebs nicht unter den unteren Scheitelpunkt der Wendel der Förderschnecke sinken. Weiterhin ist es wichtig, dass der obere Scheitelpunkt OS der Bohrung für den Ablauf 140 in vertikaler Richtung immer oberhalb des unteren Scheitelpunktes US der Wirkungsöffnung einer in der Hauptbohrung 110 angeordneten ringförmigen Dichtlippe liegt. Vorzugsweise sollte der Abstand größer 0 und kleiner als der Radius r1 der Bohrung für den Ablauf 140 sein. Weiterhin sollte für den horizontalen Abstand d1 zwischen der Mitte der Hauptbohrung 110 und der Mitte der Bohrung für den Ablauf 140 gelten: R1 < d1 < R1 + 100 mm, wobei R1 den Wirkungsradius der ringförmigen Dichtlippe bezeichnet.

Zur Erläuterung des Begriffes Wirkungsradius: Wenn der Walzenzapfen nicht in die Bohrung 110 eingeführt ist, ist die ringförmige Dichtlippe entlastet, d. h. ihr Innenradius ist minimal. Wenn jedoch der Walzenzapfen in die Bohrung eingeführt ist, so liegt die Dichtlippe auf dem Walzenzapfen an und wird dabei leicht radial gestaucht. Diese radiale Stauchung bewirkt eine geringfügige Vergrößerung des Innenradiusses der Dichtlippe; der sich dann einstellende Radius der Dichtlippe wird als Wirkungsradius bezeichnet.

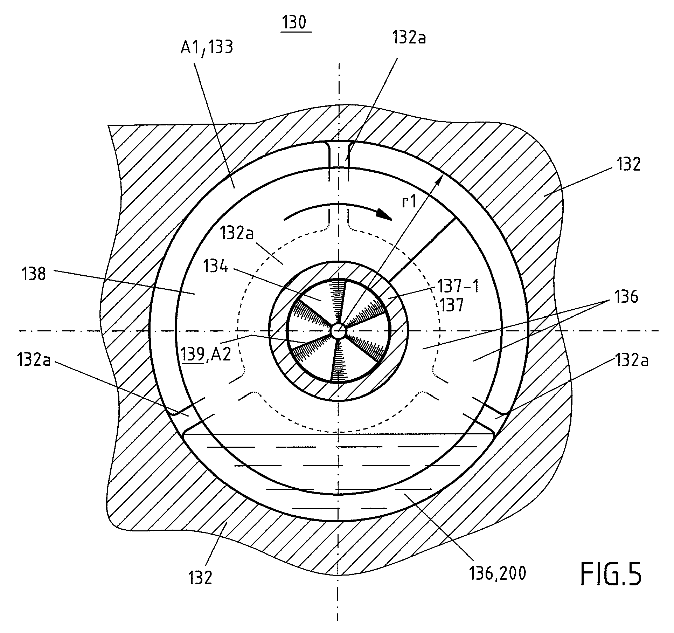

Figur 5 zeigt einen Querschnitt durch die erfindungsgemäße Pumpeneinrichtung 130. Der äußere schraffierte Bereich zeigt das Pumpengehäuse 132 mit einer kreis- bzw. zylinderförmigen Bohrung, in welche die Schneckenpumpe 137 eingesetzt ist. Es ist der rohrförmige Grundkörper 137-1 zu erkennen, welcher sich koaxial zur Bohrung in dem Gehäuse 132 erstreckt. Im Inneren des rohrförmigen Grundkörpers 137-1 ist die Turbine 139 mit ihren Schaufelrädern schematisch dargestellt zu erkennen. Der Innenquerschnitt des rohrförmigen Grundkörpers repräsentiert die Querschnittsfläche A2 des Zulaufkanals 134.

Der Außenraum zwischen der Außenseite des ringförmigen Grundkörpers 137-1 und der Innenseite der Bohrung 133 im Inneren des Gehäuses 132 repräsentiert, wie oben bereits erwähnt, den Ablaufkanal 136. Die Querschnittsfläche dieses koaxialen Ringraumes repräsentiert die Querschnittsfläche A1 des Ablaufkanals. Weil das Schmiermittel unter Druck p durch den Zulaufkanal 134 und den Zulauf 120 dem Einbaustück zugeführt wird und lediglich mit Atmosphärendruck im Ablaufkanal 136 abgeführt wird, kann die Querschnittsfläche des Zulaufkanals 134 wesentlich kleiner als die Querschnittfläche des Ablaufkanals 136 ausgebildet sein. Typischerweise liegt das Verhältnis von Querschnittsfläche A1 des Ablaufkanals zur Querschnittsfläche A2 des Zulaufkanals zwischen 2 und 10. Dieses Verhältnis wird vor allem auch durch die erfindungsgemäße Pumpeneinrichtung 130 ermöglicht, welche als Unterstützung zum schnelleren Abführen des Schmiermittels 200 aus dem Schmiermittelsammelraum 142 unter Atmosphärendruck dient.

Wie bereits oben erwähnt, ermöglicht die Pumpeneinrichtung 130 den Verzicht auf eine zweite Ablaufbohrung auf der Ablaufseite des Einbaustücks. Außerdem kann der Radius r1 der Bohrung 133 im Gehäuse 132 der Pumpeneinrichtung bzw. des Ablaufkanals 136 so gering gehalten werden, dass die oben unter Bezugnahme auf Figur 4 beschriebenen konstruktiven Abstandsverhältnisse eingehalten werden können.

Schließlich ist in Figur 5 der speichenförmige Aufbau der Haltemittel 132a zu erkennen. Dieser Aufbau der Haltemittel in Form von Speicherädern oder Lochplatten ist erforderlich, damit das Schmiermittel die Pumpeneinrichtung und insbesondere den Ablaufkanal 136 durchströmen kann.

### Bezugszeichenliste

- 100: Einbaustück
- 105: Ablaufseite
- 110: Hauptbohrung
- 120: Zulauf
- 120-1: Zulauföffnung
- 130: Pumpeneinrichtung
- 132: Gehäuse
- 132a: Haltemittel
- 133: Bohrung
- 134: Zulaufkanal
- 136: Ablaufkanal
- 137: Schneckenpumpe
- 137-1: rohrförmiger Grundkörper
- 137-2: Lager
- 138: Förderschnecke
- 139: Turbine
- 140: Ablauf
- 142: Schmiermittelsammelraum

- 200: Schmiermittel

- A1: Querschnittsfläche Ablaufkanal
- A2: Querschnittsfläche Zulaufkanal
- OS: Oberer Scheitelpunkt der Ablaufbohrung
- US: Unterer Scheitelpunkt des Wirkungsdurchmessers der Ringdichtung
- UB: unterer Scheitelpunkt der Hauptbohrung
- R1: Wirkungsradius der ringförmigen Dichtlippe
- r1: Radius der Bohrung für den Ablauf
- d1: horizontaler Abstand zwischen der Mitte der Hauptbohrung und der Mitte der Bohrung für den Ablauf
- d2: Abstand zwischen dem unteren Scheitelpunkt (UB) der Hauptbohrung (110) des Einbaustücks und der Unterseite des oberen Einbaustücks
- L: Längsachse (L) der Bohrung (133) in dem Gehäuse
- LM: senkrechte Mittenebene der Hauptbohrung
- s: Abstand
- PH: Ölstand im Schmiermittelsammelraum (142)

## Patentansprüche

1. Einbaustück (100) zum Lagern einer Walze in einem Walzenständer eines Walzgerüstes, mit
einer Hauptbohrung (110) zur Aufnahme eines Zapfens der Walze;
einem Zulauf (120) für Schmiermittel (200);
einem Rücklauf (140) für das Schmiermittel (200),
einer Pumpeneinrichtung (130) zum Fördern des durch den Ablauf aus dem Einbaustück zurücklaufenden Schmiermittels (200);
wobei die Pumpeneinrichtung ein Gehäuse (132), einen Zulaufkanal (134) und einen Ablaufkanal (136) aufweist, wobei der Zulaufkanal mit dem Zulauf und der Ablaufkanal mit dem Ablauf bezüglich der Strömung des Schmiermittels kommuniziert; und
wobei die Pumpeneinrichtung (130) von dem Strom des Schmiermittels (200) im Zulauf (120) angetrieben wird;
**dadurch gekennzeichnet, dass**
die Pumpeneinrichtung (130) in ihrem Gehäuse aufweist:
eine Schneckenpumpe (137) mit einer Förderschnecke (138) in dem Ablaufkanal (136) zum Fördern des zurücklaufenden Schmiermittels;
eine von dem unter Druck (p) stehenden zulaufenden Schmiermittel angetriebene Turbine (139) in dem Zulaufkanal (134) zum Antreiben der Schneckenpumpe (137);
die Schneckenpumpe (137) aus einem rohrförmigen Grundkörper (137-1) gebildet ist, welcher auf seiner Außenseite die Förderschnecke (138) trägt, das Gehäuse (132) eine Bohrung (133) aufweist, in welcher die Schneckenpumpe (137) in Lagern (137-2) drehbar gelagert ist, wobei der Raum zwischen der Außenseite des Grundkörpers und der Innenseite der Bohrung den Ablaufkanal (136) bildet, wobei die Förderschnecke (138) in den Ablaufkanal (136) hineinragt, zum Fördern des zurücklaufenden Schmiermittels (200); wobei die Lager (137-2) - und damit auch die Schneckenpumpe (137) - mit Hilfe von Haltemitteln (132a) im Innern der Bohrung ortsfest positioniert, aber drehbar gelagert sind;
die Wendel der Förderschnecke (138) mit einem spitzen Winkel α - in Strömungsrichtung des Schmiermittels im Rücklauf - gegenüber dem rohrförmigen Grundkörper (137-1) geneigt ist;
die Haltemittel (132a) in Form von Speichenrädern oder Lochplatten ausgebildet sind, welche sich jeweils in einer Ebene senkrecht zur Längsachse (L) der Bohrung (133) in dem Gehäuse (132) erstrecken, und jeweils an ihrer Peripherie an der Innenseite der Bohrung mit dem Gehäuse (132) verbunden sind und an ihrer Innenseite - vorzugsweise koaxial zur Bohrung - jeweils eines der Lager (137-2) für die Schneckenpumpe (137) tragen; und
das Innere des rohrförmigen Grundkörpers (137-1) den Zulaufkanal (134) bildet, in welchem die Turbine (139) angeordnet und drehfest mit dem Grundkörper verbunden ist.

2. Einbaustück (100) nach einem der vorangegangenen Ansprüche,
**dadurch gekennzeichnet, dass**
das Verhältnis von Querschnittsfläche (A1) des Ablaufkanals zu Querschnittsfläche (A2) des Zulaufkanals (134) zwischen 2 und 10 liegt.

3. Einbaustück (100) nach einem der vorangegangenen Ansprüche,
**dadurch gekennzeichnet, dass**
der Ablauf (140) auf der Ablaufseite (105) des Einbaustücks in Form einer einzigen Bohrung aus dem Einbaustück austritt und der einzige Zulauf (120) innerhalb der Bohrung für den Rücklauf in das Einbaustück hineingeführt ist; und
die Pumpeneinrichtung (130) außen auf die Ablaufseite des Einbaustücks (100) so aufgesetzt ist, dass der Zulaufkanal (134) in der Pumpeneinrichtung mit dem Zulauf (120) des Einbaustücks und der Rücklaufkanal (136) in der Pumpeneinrichtung (130) mit dem Ablauf (140) des Einbaustücks kommuniziert.

4. Einbaustück (100) nach Anspruch 3,
**dadurch gekennzeichnet, dass**
die Bohrung für den Ablauf auf der Ablaufseite (105) des Einbaustücks (100) in Bezug auf die Hauptbohrung (110) zur Aufnahme des Walzenzapfens derart positioniert ist, dass der obere Scheitelpunkt (OS) der Bohrung für den Ab- lauf (140) einen vertikalen Abstand s zum unteren Scheitelpunkt (US) der Wirkungsöffnung der in der Hauptbohrung angeordneten ringförmigen Dichtlippe aufweist mit 0 < s < r1, wobei r1 dem Radius der Bohrung für den Ablauf entspricht, wobei der obere Scheitelpunkt (OS) der Bohrung für den Ablauf oberhalb des unteren Scheitelpunktes (US) der Wirkungsöffnung der Dichtlippe liegt; und
zwischen der Mitte der Hauptbohrung und der Mitte der Bohrung für den Ablauf ein horizontaler Abstand d1 besteht mit R1 < d1 < R1 + 100 mm, wobei R1 den Wirkungsradius der ringförmigen Dichtlippe bezeichnet.

5. Einbaustück (100) nach einem der vorangegangenen Ansprüche,
**dadurch gekennzeichnet, dass**
die Durchmesser (2x r1) der Bohrungen für den Ablauf innerhalb des Einbaustücks und für den Ablaufkanal (140) in der Pumpeneinrichtung (130) zwischen 40 und 80 mm betragen und dass die Bohrungen an ihrer Verbindungsstelle zumindest weitgehend fluchten.

6. Einbaustück (100) nach einem der vorangegangenen Ansprüche,
**dadurch gekennzeichnet, dass**
es sich bei dem Einbaustück um ein oberes Einbaustück zum Lagern einer oberen Stützwalze oder um ein unteres Einbaustück zum Lagern einer unteren Stützwalze in dem Walzgerüst handelt.

7. Einbaustück (100) nach Anspruch 6,
**dadurch gekennzeichnet, dass**
die Unterseite des oberen Einbaustücks eben ausgebildet ist.

8. Einbaustück (100) nach Anspruch 7,
**dadurch gekennzeichnet, dass**
für den Abstand d2 zwischen dem unteren Scheitelpunkt (UB) der Hauptbohrung (110) des Einbaustücks und der Unterseite des oberen Einbaustücks gilt: d2 < 20 mm, vorzugsweise d2 < 10 mm.

## Claims

1. Chock (100) for mounting a roll in a roll housing of a roll stand, with a main bore (110) for receiving a pin of the roll;
a feed (12) for lubricant (200);
a return (140) for the lubricant (200);
a pump device (130) for conveying the lubricant (200) returning from the chock via the drain;
wherein the pump device (130) comprises a housing (132), a feed channel (134) and a drain channel (136), wherein the feed channel communicates with the feed and the drain channel with the drain with respect to the flow of the lubricant; and
wherein the pump device (130) is driven by the flow of the lubricant (200) in the feed (120); **characterised in that**
the pump device (130) comprises in the housing thereof:
a worm pump (137) with a conveying worm (138) in the drain channel (136) for conveying the returning lubricant;
a turbine (139), which is driven by the lubricant being fed and standing under pressure (p), in the feed channel (134) for driving the worm pump (137);
the worm pump (137) is formed from a tubular base body (137-1), which carries the conveying worm (138) on its outer side;
the housing (132) has a bore in which the worm pump (137) is rotatably mounted in bearings (137-2), wherein the space between the outer side of the base body and the inner side of the bore forms the drain channel (136), wherein the conveying worm (138) protrudes into the drain channel (136), for conveying the returning lubricant (200);
wherein the bearings (137-2) and thus also the worm pump (137) are positioned in stationary location in the interior of the bore with the aid of holding means (132a), but are rotatably mounted;
the helix of the conveying worm (138) is inclined at an acute angle α relative to the tubular body (137-1) in flow direction of the lubricant in the return;
the holding means (132a) is constructed in the form of spoke wheels or apertured plates, which each extend in a plane perpendicular to the longitudinal axis (L) of the bore (133) in the housing (132) and are connected at the periphery thereof at the inner side of the bore with the housing (132) and which each carry at the inner side thereof, preferably coaxially with the bore, a respective one of the bearings (137-2) for the worm pump (137); and
the interior of the tubular base body (137-1) forms the feed channel (134) in which the turbine (139) is arranged and connected with the base body to be secure against relative rotation.

2. Chock (100) according to the preceding claim, **characterised in that** the ratio of cross-sectional area (A1) of the drain channel to cross-sectional area (A2) of the feed channel (134) is between 2 and 10.

3. Chock (100) according to one of the preceding claims, **characterised in that** the drain (140) on the drain side (105) of the chock emerges from the chock in the form of a single bore and the single feed (120) is led into the chock within the bore for the return; and
the pump device (130) is so placed externally on the drain side of the chock (100) that the feed channel (134) communicates in the pump device with the feed (120) of the chock and the return channel (136) communicates in the pump device (130) with the drain (140) of the chock.

4. Chock (100) according to claim 3, **characterised in that** the bore for the drain is positioned on the drain side (105) of the chock (100) in such a way with respect to the main bore (110) for reception of the roll pin that the upper crest point (OS) of the bore for the drain (140) has a vertical spacing s from the lower crest point (US) of the effective opening of the annular sealing lip arranged in the main bore, wherein 0 < s < r1, wherein r1 corresponds with the radius of the bore for the drain and wherein the upper crest point (OS) of the bore for the drain lies above the lower crest point (US) of the effective opening of the sealing lip; and
a horizontal spacing d1 is present between the centre of the main bore and the centre of the bore for the drain, wherein R1 < d1 < R1 + 100 mm and wherein R1 denotes the effective radius of the annular sealing lip.

5. Chock (100) according to any one of the preceding claims, **characterised in that** the diameter (2 x r1) of the bore for the drain within the chock and for the drain channel (140) in the pump device (130) is between 40 and 80 millimetres and that the bores are at least substantially in alignment at the connecting point thereof.

6. Chock (100) according to any one of the preceding claims, **characterised in that** the chock is an upper chock for mounting an upper backing roll or a lower chock for mounting a lower backing roll in the roll stand.

7. Chock (100) according to claim 6, **characterised in that** the lower side of the upper chock is formed to be planar.

8. Chock (100) according to claim 7, **characterised in that** for the spacing d2 between the lower crest point (UB) of the main bore (110) of the chock and the lower side of the upper chock there applies: d2 < 20 mm, preferably d2 < 10 mm.

## Revendications

1. Empoise (100) pour le montage d'un cylindre dans un montant d'une cage de laminoir, comprenant :
un alésage principal (110) pour la réception d'un tourillon du cylindre ;
une alimentation (120) pour un lubrifiant (200) ;
un retour (140) pour le lubrifiant (200) ;
un mécanisme de pompage (130) pour le transport du lubrifiant (200) qui retourne à travers la sortie à partir de l'empoise ;
le mécanisme de pompage présentant un carter (132), un canal d'alimentation (134) et un canal de sortie (136), le canal d'alimentation communiquant avec l'alimentation et le canal de sortie communiquant avec la sortie, en ce qui concerne l'écoulement du lubrifiant ; et
le mécanisme de pompage (130) étant entraîné par le courant du lubrifiant (200) dans l'alimentation (120) ;
**caractérisée en ce que**
le mécanisme de pompage (130) présente dans son carter :
une pompe à vis hélicoïdale (137) comprenant une vis transporteuse (138) dans le canal de sortie (136) pour le transport du lubrifiant qui retourne ;
une turbine (139) entraînée par le lubrifiant d'alimentation soumis à une pression (p), dans le canal d'alimentation (134) pour l'entraînement de la pompe à vis hélicoïdal (137) ;
la pompe à vis hélicoïdal (137) est réalisée à partir d'un corps de base de forme tubulaire (137-1) qui porte la vis transporteuse (138) sur son côté externe ;
le carter (132) présente un alésage (133) dans lequel la pompe à vis hélicoïdale (137) est montée en rotation dans des paliers (137-2), l'espace libre ménagé entre le côté externe du corps de base et le côté interne de l'alésage formant le canal de sortie (136), la vis transporteuse (138) faisant saillie dans le canal de sortie (136) pour le transport du lubrifiant (200) qui retourne ;
les paliers (137-2) - et par conséquent également la pompe à vis hélicoïdale (137) - étant disposés à demeure à l'aide de moyens d'arrêt (132a) à l'intérieur de l'alésage, tout en étant montés en rotation ;
le filet de la vis transporteuse (138) étant incliné en formant un angle aigu α - dans la direction d'écoulement du lubrifiant dans le retour - par rapport au corps de base de forme tubulaire (137-1) ;
les moyens d'arrêt (132a) sont réalisés sous la forme de roues à rayons ou de plaques perforées, qui s'étendent respectivement dans un plan perpendiculaire à l'axe longitudinal (L) de l'alésage (133) dans le carter (132), et sont reliés respectivement à leur périphérie contre le côté interne de l'alésage au carter (132) et supportent, contre leur côté interne - de préférence en position coaxiale par rapport à l'alésage-respectivement un des paliers (137-2) pour la pompe à vis hélicoïdale (137) ; et
l'intérieur du corps de base de forme tubulaire (137-1) forme le canal d'alimentation (134) dans lequel la turbine (139) est disposée et est reliée à demeure avec le corps de base.

2. Empoise (100) selon l'une quelconque des revendications précédentes, **caractérisée en ce que** :
le rapport entre la surface de section transversale (A1) du canal de sortie à la surface de section transversale (A2) du canal d'alimentation (134) se situe entre 2 et 10.

3. Empoise (100) selon l'une quelconque des revendications précédentes, **caractérisée en ce que** :
la sortie (140) sort de l'empoise du côté sortie (105) de l'empoise sous la forme d'un alésage unique et l'alimentation unique (120) est guidée dans l'empoise à l'intérieur de l'alésage pour le retour ; et
le mécanisme de pompage (130) est appliqué à l'extérieur du côté sortie de l'empoise (100) d'une manière telle que le canal d'alimentation (134), dans le mécanisme de pompage, communique avec l'alimentation (120) de l'empoise et le canal de retour (136), dans le mécanisme de pompage (130) communique avec la sortie (140) de l'empoise.

4. Empoise (100) selon la revendication 3 ;
**caractérisée en ce que**
l'alésage pour la sortie du côté sortie (105) de l'empoise (100) est positionné, par rapport à l'alésage principal (110) pour la réception du tourillon de cylindre, d'une manière telle que le sommet supérieur (OS) de l'alésage pour la sortie (140) présente une distance verticale « s » par rapport au sommet inférieur (US) de l'ouverture utile de la lèvre d'étanchéité de forme annulaire disposée dans l'alésage principal, étant entendu que 0 < s < r1, r1 correspondant au rayon de l'alésage pour la sortie, le sommet supérieur (OS) de l'alésage pour la sortie étant disposé au-dessus du sommet inférieur (US) de l'ouverture utile de la lèvre d'étanchéité ; et
entre le milieu de l'alésage principal et le milieu de l'alésage pour la sortie, existe une distance horizontale d1, étant entendu que R1 < d1 < R1 = 100 mm, R1 désignant le rayon utile de la lèvre d'étanchéité de forme annulaire.

5. Empoise (100) selon l'une quelconque des revendications précédentes, **caractérisée en ce que** :
les diamètres (2 x r1) des alésages pour la sortie à l'intérieur de l'empoise et pour le canal de sortie (140) dans le mécanisme de pompage (130) se situent entre 40 et 80 mm et **en ce que** les alésages sont disposés à fleur au moins dans une large mesure, à leur endroit de liaison.

6. Empoise (100) selon l'une quelconque des revendications précédentes, **caractérisée en ce que** :
en ce qui concerne l'empoise, il s'agit d'une empoise supérieure pour le montage d'un cylindre de support supérieur ou d'une empoise inférieure pour le montage d'un cylindre de support inférieur dans la cage de laminoir.

7. Empoise (100) selon la revendication 6 ;
**caractérisée en ce que**
le côté inférieur de l'empoise supérieure est réalisé sous une forme plane.

8. Empoise (100) selon la revendication 7 ;
**caractérisée en ce que**
la distance d2 entre le sommet inférieur (US) de l'alésage principal (110) de l'empoise et le côté inférieur de l'empoise supérieure répond à l'équation : d2 < 20 mm, de préférence d2 < 10 mm.
